# EUROPÄISCHE PATENTSCHRIFT

(11) **EP 2 925 574 B1**
(45) Veröffentlichungstag und Bekanntmachung des Hinweises auf die Patenterteilung: **04.01.2017**
(21) Anmeldenummer: 13792017.9
(22) Anmeldetag: 18.11.2013
(51) Int. Cl.: B60T 1/10, B60L 7/00, B60T 8/48, B60L 7/14, B60L 7/26, B60T 7/04, B60T 13/68, B60L 15/20

(54) **BREMSSYSTEM FÜR EIN LANDFAHRZEUG UND VERFAHREN ZUM STEUERN DES BREMSSYSTEMS**
BRAKE SYSTEM FOR A LAND VEHICLE AND METHOD FOR CONTROLLING THE BRAKE SYSTEM
SYSTÈME DE FREINAGE POUR VÉHICULE TERRESTRE ET PROCÉDÉ DE COMMANDE DU SYSTÈME DE FREINAGE

(30) Priorität: 29.11.2012 DE 102012023345
(43) Veröffentlichungstag der Anmeldung: 07.10.2015
(73) Patentinhaber: Lucas Automotive GmbH, 56070 Koblenz (DE)
(72) Erfinder: KNECHTGES, Josef, 56727 Mayen (DE); MARX, Andreas, 56244 Hartenfels (DE)
(74) Vertreter: Schmidt, Steffen J.
(86) Internationale Anmeldenummer: PCT/EP2013/074048
(87) Internationale Veröffentlichungsnummer: WO 2014/082885

(56) Entgegenhaltungen:
- WO-A1-2006/131366
- DE-A1-102009 039 207
- DE-A1-102011 017 595

## Beschreibung

### Technisches Gebiet

Hier wird ein Fahrzeugbremssystem für ein Landfahrzeug beschrieben, das regeneratives Bremsen, also einen Bremsvorgang bei dem eine elektrische Maschine kinetische Energie des Landfahrzeugs in elektrische Energie umwandelt, ermöglicht.

### Hintergrund

Fahrzeuge weisen in der Regel eine Fahrzeugbremsanlage auf, in welcher zum Bremsen ein Hydraulikfluid an Radbremsen eines Fahrzeugs geleitet wird. Zunehmend haben Fahrzeuge aber auch eine elektrische Maschine die dazu dient, das Fahrzeug zumindest unterstützend zu einem Verbrennungsmotor anzutreiben. Die elektrische Maschine bietet gegenüber einem Verbrennungsmotor den Vorteil, dass sie bei der sogenannten regenerativen Bremsung generatorisch betrieben werden kann, um eine Fahrzeugbatterie aufzuladen. Die in der aufgeladenen Batterie gespeicherte chemische Energie findet dann in einem motorischen Betrieb der elektrischen Maschine wieder Verwendung zum Antrieb des Kraftfahrzeugs.

Während im Normalbremsbetrieb Bewegungsenergie des Fahrzeugs aufgrund des reibschlüssigen Zusammenwirkens von Bremsbacken und Bremsscheiben an den Radbremsen in Wärmeenergie umgewandelt wird, erfolgt im regenerativen Bremsbetrieb somit ein Aufladen der Fahrzeugbatterie. Da im regenerativen Bremsbetrieb das Abbremsen des Kraftfahrzeugs mittels der elektrischen Maschine erfolgt, können die Radbremsen unbetätigt bleiben. In der Regel ist dies sogar erwünscht, da jegliche an den Radbremsen in Wärmeenergie umgewandelte Bewegungsenergie nicht mehr zum Aufladen der Fahrzeugbatterie zur Verfügung steht.

So beschreibt zum Beispiel das Dokument DE 10 2009 039 207 A1 eine regenerative Fahrzeugbremse und ein Betriebsverfahren für eine regenerative Fahrzeugbremse, welche eine Regenerations-Einrichtung aufweist, die einen asymmetrischen regenerativen Bremsbetrieb für einen ersten und einen zweiten hydraulischen Bremskreis ermöglicht.

Die in Dokument DE 10 2009 039 207 A1 beschriebene Fahrzeugbremse umfasst allerdings mehr Komponenten als herkömmliche Bremssysteme. Diese zusätzlichen Komponenten benötigen zusätzlichen Bauraum und erhöhen das Systemgewicht. Zudem bedingen Pedalrückwirkungs-Simulationseinrichtungen, die bei regenerativen Fahrzeugbremsen zum Einsatz kommen, häufig eine aufwendigere Regelung des Bremssystems oder weisen teilweise eine nicht zufriedenstellende Regelgüte auf.

Aus dem Stand der Technik ist eine Vielzahl von Maßnahmen bekannt, um das Bremsverhalten bei konventionellen Bremsvorgängen, also Bremsvorgängen ohne Energierückgewinnung, zu verändern. So wird zum Beispiel in Dokument EP 1 888 387 B1 eine Staudruckregelung beschrieben. Hierfür sind eine Pumpe und ein Ventil einer Radbremsventilanordnung vorgesehen, wobei das Ventil eine in geöffneten Ventilzustand wirksame Drossel umfasst. Durch Betätigen der Pumpe wird, wenn das Ventil geöffnet ist, an der Eingangsseite der Radbremse ein Staudruck erzeugt. Durch den erzeugten Staudruck können bei automatischen Bremsvorgängen Störeinflüsse - wie zum Beispiel ungleiche Luftspiele zwischen Bremskolben und Bremsbelägen, ungleich abgenutzte Bremsbeläge, verschobene Bremskolben - kompensiert werden. Zudem können ungünstige Charakteristika der Pumpe bei niedriger Förderleistung vermieden werden.

### Zugrunde liegende Aufgabe

Es ist daher Aufgabe, ein einfach aufgebautes und kostengünstig herstellbares Fahrzeugbremssystem bereitzustellen. Zudem soll das Bremssystem eine hohe Regelgüte aufweisen, um den Fahrer ein komfortables Bremsverhalten und Bremsgefühl zu vermitteln.

### Vorgeschlagene Lösung

Zur Lösung der Aufgabe wird ein hydraulisches Bremssystem für ein Landfahrzeug vorgeschlagen, wobei das hydraulische Bremssystem dazu eingerichtet ist, einen regenerativen Bremsvorgang des Landfahrzeugs zu ermöglichen. Das hydraulische Bremssystem umfasst ein vom Fahrer betätigbares Bremspedal; eine Radbremse, die einem Rad des Landfahrzeugs zugeordnet ist; einen Hauptbremszylinder, der über einen Bremskraftverstärker mit dem Bremspedal verbunden ist und dazu eingerichtet ist, bei einer Betätigung des Bremspedals Hydraulikfluid in die Radbremse zu verschieben; eine Pumpe, deren Ausgang über eine Zuführleitung mit der Radbremse und deren Eingang über eine Rückführleitung mit der Radbremse verbunden ist, wobei die Pumpe dazu eingerichtet ist, Hydraulikfluid zu der Radbremse zu fördern; einen über die Rückführleitung mit dem Eingang der Pumpe und der Radbremse verbundenen Zwischenspeicher; ein Druckabbauventil, das in der Rückführleitung der Radbremse angeordnet ist und im geöffneten Zustand eine Drosselwirkung aufweist. Ferner umfasst das hydraulische Bremssystem eine Steuereinheit, die dazu eingerichtet ist, während eines regenerativen Bremsvorgangs des Landfahrzeugs die Differenz zwischen einem vom Fahrer durch die Betätigung des Bremspedals vorgegebenen Gesamtbremsmoment und einem von einer elektrischen Maschine bereitgestellten generatorischen Bremsmoment durch ein Einstellen des hydraulischen Bremsmoments auszugleichen, wobei die Steuereinheit zum Einstellen des hydraulischen Bremsmoments eine Differenz zwischen dem Gesamtbremsmoment und dem generatorischen Bremsmoment ermittelt; aus der Differenz des Gesamtbremsmoments und des generatorischen Bremsmoments einen erforderlichen Bremsdruck ermittelt; Volumenströme über das Druckabbauventil anhand des Schaltzustands und der Drosselwirkung des Druckabbauventils schätzt; eine Volumenaufnahme des Zwischenspeichers anhand des geschätzten Volumenstroms ermittelt; einen aktuellen Bremsdruck anhand einer einem Betätigungsweg des Bremspedals entsprechenden Volumenverschiebung von dem Hauptbremszylinder zu der Radbremse und anhand der ermittelten Volumenaufnahme des Zwischenspeichers schätzt; und in Abhängigkeit des ermittelten erforderlichen Bremsdrucks und des aktuellen Bremsdrucks dem Druckabbauventil einen Schaltzustand vorgibt.

Gemäß einem weiteren Aspekt wird ein Landfahrzeug vorgeschlagen, das das vorstehend definierte Bremssystem, eine elektrische Maschine und ein der elektrischen Maschine zugeordnetes Steuergerät aufweist. Das Steuergerät steuert dabei den Aufbau des generateratorischen Bremsmoments der elektrischen Maschine in Abhängigkeit eines durch die Drosselwirkung des Druckabbauventils bestimmten Druckabbaugradienten.

Zudem wird ein Verfahren zum Steuern eines hydraulischen Bremssystems während eines regenerativen Bremsvorgangs vorgeschlagen. In Reaktion auf einen Bremswunsch des Fahrers wird von einer Steuereinheit eine Differenz zwischen einem Gesamtbremsmoment und einem von einer elektrischen Maschine bereitgestellten generatorischen Bremsmoment ermittelt, wobei das Gesamtbremsmoment dem vom Fahrer vorgegebenen Bremswunsch entspricht; aus der Differenz des Gesamtbremsmoments und des generatorischen Bremsmoments wird ein erforderlicher Bremsdruck ermittelt; ein Volumenstrom über ein Druckabbauventil wird anhand des Schaltzustands und der Drosselwirkung des Druckabbauventils geschätzt; eine Volumenaufnahme eines Zwischenspeichers wird anhand des geschätzten Volumenstroms ermittelt; ein aktueller Bremsdruck wird anhand einer einem Betätigungsweg des Bremspedals entsprechenden Volumenverschiebung von einem Hauptbremszylinder zu einer Radbremse und anhand der berechneten Volumenaufnahme des Zwischenspeichers geschätzt; und in Abhängigkeit des ermittelten erforderlichen Bremsdrucks und des aktuellen Bremsdrucks wird ein Öffnen des Druckabbauventils bewirkt.

Ferner wird ein computerlesbarer Datenträger vorgeschlagen, auf dem ein Computerprogrammprodukt gespeichert ist, das wenn es von einer Steuereinheit eines Bremssystems ausgeführt wird, das vorstehend definierte Verfahren ausführt.

Da der Aufbau des hydraulischen Bremsmoments in gleicher Weise oder zumindest ähnlich wie bei einem rein hydraulischen Bremsvorgang erfolgt, kann dem Fahrer das gewohnte Bremsgefühl auch ohne eine zusätzliche Simulationseinrichtung vermittelt werden. Außerdem kann die beschriebene Funktion in einem konventionellen Antiblockiersystem oder Fahrdynamikregelungssystems implementiert werden, dabei ist es lediglich erforderlich, die Steuereinheit entsprechend zu modifizieren.

Bei einem regenerativen Bremsvorgang kann das Bremssystem das erforderliche hydraulische Bremsmoment bereitstellen, wobei für die Regelung des Bremsmoments nur ein Minimum von Ventilschaltvorgängen erforderlich ist.

### Ausgestaltung und Eigenschaften

Das hydraulische Bremssystem kann zwei, drei, vier oder mehr Radbremsen mit jeweiligem Druckabbauventil umfassen. Dabei kann jedem Rad des Landfahrzeugs eine Radbremse zugeordnet sein, so dass die Anzahl der Radbremsen durch das jeweilige Landfahrzeug bestimmt wird. Während herkömmliche Personenkraftwagen in der Regel vier Räder und somit vier Radbremsen aufweisen, können zum Beispiel Nutzfahrzeuge vier oder sechs Räder und somit vier oder sechs Radbremsen aufweisen.

Die Radbremsen können zumindest zu einem Bremskreis zusammengefasst sein. Das Landfahrzeug kann zum Beispiel zwei Bremskreise mit zwei Radbremsen und somit mit zwei Druckabbauventilen aufweisen. Die Radbremsen können so zusammengefasst werden, dass die einer Vorderachse sowie die einer Hinterachse des Landfahrzeugs zugeordneten Radbremsen jeweils einen Bremskreis bilden. Alternativ dazu können aber auch diagonal gegenüberliegende Radbremsen zu einem Bremskreis zusammengefasst werden.

Die Steuereinheit kann zum Einstellen des hydraulischen Bremsmoments ferner dazu eingerichtet sein, für jeden Bremskreis die Volumenströme über die Druckabbauventile anhand der jeweiligen Schaltzustände und Drosselwirkungen zu schätzen, und in Abhängigkeit des ermittelten erforderlichen Bremsdrucks und des aktuellen Bremsdrucks den Druckabbauventilen Schaltzustände vorzugeben. So kann zum Beispiel bei einem zwei Radbremsen umfassenden Bremskreis die Steuereinheit ein Öffnen von einem oder von beiden Druckabbauventilen bewirken. Dabei kann die Steuereinheit das Druckabbauventil öffnen, dessen Drosselwirkung am ehesten geeignet ist, eine gewünschte Veränderung des Bremsdrucks in den Radbremsen des Bremskreises zu bewirken.

Die Steuereinheit kann ferner dazu eingerichtet sein, wenn die durch ein geöffnetes Druckabbauventil bedingte Veränderung des hydraulischen Bremsmoments alleine nicht zum Ausgleich der Differenz zwischen Gesamtbremsmoment und generatorischen Bremsmoment ausreicht, der Pumpe eine Förderleistung derart vorzugeben, dass der aktuelle Bremsdruck dem erforderlichen Bremsdruck entspricht.

Die der Pumpe vorgegebene Förderleistung kann einer Volumenverschiebung zu den Radbremsen entsprechen, die kleiner, gleich oder größer als die Volumenverschiebung über das geöffnete Druckabbauventil ist. So kann zum Beispiel mit einer Volumenverschiebung die größer als die Volumenverschiebung über ein geöffnetes Druckabbauventil ist, Bremsdruck, und somit ein hydraulisches Bremsmoment, in den Radbremsen aufgebaut werden. Wenn zum Beispiel die Volumenverschiebungen zur Radbremse der Volumenverschiebung über das geöffnete Druckabbauventil entspricht, kann der Bremsdruck in den Radbremsen, trotz geöffnetem Druckabbauventil konstant gehalten werden. Mit einer Volumenverschiebung zu den Radbremsen die kleiner ist als die Volumenverschiebung über das geöffnete Druckabbauventil, kann zum Beispiel der Rückgang des Bremsdrucks in den Radbremsen verzögert werden. Somit kann durch die Förderleistung der Pumpe die Veränderung des Bremsdrucks in den Radbremsen exakter an eine gewünschte Veränderung angepasst werden.

Das hydraulische Bremssystem kann ein erstes Isolationsventil und ein zweites Isolationsventil umfassen, wobei das erste und das zweite Isolationsventil dazu eingerichtet sind, die Zuführleitung zu der ersten beziehungsweise zu der zweiten Radbremse vollständig oder teilweise zu sperren.

Die Steuereinheit kann ferner dazu eingerichtet sein, während des regenerativen Bremsvorgangs das erste und das zweite Isolationsventil vollständig oder teilweise zu schließen. Die daraus resultierende Pedalrückwirkung am Bremspedal kann dem Fahrer, auch ohne zusätzliche Pedalrückwirkungs-Simulationseinrichtung, ein gewohntes Bremsgefühl vermitteln. Die Steuereinheit kann ferner dazu eingerichtet sein, bis zum Einsprung des Bremskraftverstärkers das erste und das zweite Insolationsventil nicht zu schließen.

Die Steuereinheit und die Druckabbauventile können ferner dazu eingerichtet sein, dass die Steuereinheit die Drosselwirkung eines Druckabbauventils mit einem abwechselnden Öffnen und Schließen oder einem teilweisen Öffnen des Druckabbauventils variiert.

### Kurzbeschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen und den zugehörigen Zeichnungen.
Fig. 1 zeigt eine schematische Darstellung eines hydraulischen Bremssystems;
Fig. 2 zeigt ein Blenden von einem hydraulischen Bremsmoment zu einem generatorischen Bremsmoment;
Fig. 3 zeigt Schritte, um eine erforderliche Anpassung des Bremsdrucks zu ermitteln;
Fig. 4 zeigt eine erste schematische Darstellung eine Landfahrzeugs; und
Fig. 5 zeigt eine zweite schematische Darstellung eines Landfahrzeugs.

### Detaillierte Beschreibung von Ausführungsbeispielen

Im Folgenden werden Ausführungsbeispiele eines hydraulischen Bremssystems eines Landfahrzeugs beschrieben. Übereinstimmende Elemente sind dabei in den Figuren mit denselben Bezugszeichen bezeichnet.

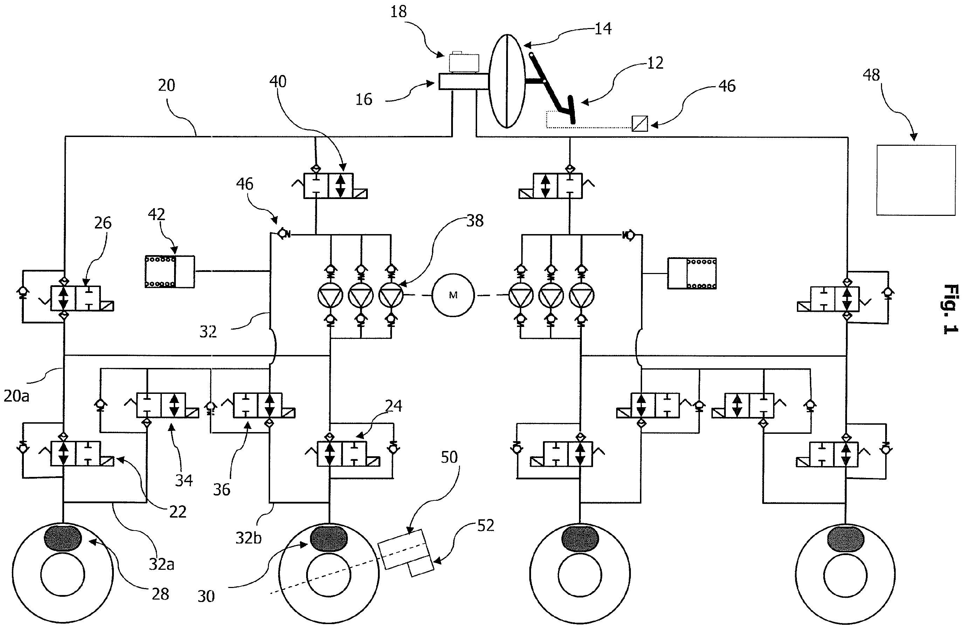

Die Figur 1 zeigt eine schematische Darstellung des hydraulischen Bremssystems 10. Das Bremssystem 10 ermöglicht einen regenerativen Bremsvorgang des Landfahrzeugs, also einen Verzögerungsvorgang bei dem eine elektrische Maschine des Landfahrzeugs die Bewegungsenergie des Landfahrzeugs in elektrische Energie umwandelt. Das Bremssystem 10 weist zwei hydraulisch voneinander getrennte Bremskreise auf, wobei im Folgenden das Bremssystem in Bezug auf einen Bremskreis erläutert wird. Das für die Komponenten dieses Bremskreises Gesagte gilt in entsprechender Weise für den anderen Bremskreis. Auch wenn im Folgenden lediglich ein Bremskreis betrachtet wird, bestehen Wechselwirkungen zwischen den beiden Bremskreisen. So erfolgt über einen Hauptbremszylinder des Landfahrzeugs ein Druckausgleich, so dass in beiden Bremskreisen in der Regel der gleiche Bremsdruck anliegt.
Das in Figur 1 gezeigte Bremssystem 10 weist ein Bremspedal 12 auf. Das Bremspedal 12 ist über einen Bremskraftverstärker 14 mit einem Hauptbremszylinder 16 verbunden. Der Hauptbremszylinder 16 ist mit einem Bremsflüssigkeitsbehälter 18 verbunden, in welchem das Hydraulikfluid vorrätig gehalten wird.

Über Zuführleitungen 20, 20a, 20b ist der Hauptbremszylinder 16 mit der ersten Radbremse 28 und der zweiten Radbremse 30 verbunden. In der Zuführleitung 20a zur ersten Radbremse 28 ist ein erstes Isolationsventil vorgesehen, wobei das erste Isolationsventil 22 dazu eingerichtet ist, die Zuführleitung 20a zur ersten Radbremse wahlweise zu sperren. In der Zuführleitung 20b zur zweiten Radbremse 30 ist ein zweites Isolationsventil 24 vorgesehen, wobei das zweite Isolationsventil 24 dazu eingerichtet ist, die Zuführleitung 20b zur zweiten Radbremse 30 wahlweise zu sperren. Zwischen dem Hauptbremszylinder 16 und den Radbremsen ist in der Zuführleitung 20 ein drittes Isolationsventil 26 angeordnet, dass dazu eingerichtet ist, die Zuführleitung 20 zu sperren. Somit isoliert das dritte Isolierventil 26 im geschlossenen Schaltzustand den Hauptbremszylinder 16 von den Radbremsen 28, 30.

Von der ersten und zweiten Radbremse 28, 30 führen Rückführleitungen 32, 32a, 32b zu einem Eingang einer Pumpe 38. In der Rückführleitung 32a von der ersten Radbremse 28 ist ein erstes Druckabbauventil 34 angeordnet, wobei das erste Druckabbauventil 34 dazu eingerichtet ist, die Rückführleitung 32a von der ersten Radbremse 28 wahlweise zu sperren. In der Rückführleitung 32b von der zweiten Radbremse 30 ist ein zweites Druckabbauventil 36 angeordnet, wobei das zweite Druckabbauventil 36 dazu eingerichtet ist, die Rückführleitung 32b von der zweiten Radbremse 30 wahlweise zu sperren.

Das dargestellte Bremssystem 10 weist einen Zwischenspeicher 42 auf. Der Zwischenspeicher 42 ist mit der Rückführleitung 32 verbunden und zur vorübergehenden Aufnahme von aus den Radbremsen 28, 30 abfließenden Hydraulikfluid eingerichtet. Der Zwischenspeicher 42 kann ein Niederdruckspeicher sein. Der Druck im Zwischenspeicher 42 kann zum Beispiel 2 bar betragen. In der Rückführleitung 32 ist zwischen dem Zwischenspeicher 42 und dem Eingang der Pumpe 38 ein Sperrventil 46 vorgesehen. Weitere zur Druckbegrenzung dienende Sperrventile sind parallel zu den Isolationsventilen 22, 24, 26 und den Druckabbauventilen 34, 36 vorgesehen, um diese, wenn der auf einer Seite der Sperrventile anliegende Druck einen vorgegebenen Wert übersteigt, zu überbrücken.

Die Pumpe 38 ist dazu eingerichtet, Hydraulikfluid zu den Radbremsen 28, 30 zu fördern. Dazu ist der Ausgang der Pumpe 38 mit der Zuführleitung 20 verbunden. Der Eingang der Pumpe 38 ist mit einem Versorgungsventil 40 verbunden, so dass der Eingang der Pumpe 38 durch das Versorgungsventil 40 mit dem Bremsflüssigkeitsbehälter 18 verbindbar ist. Durch Öffnen des Versorgungsventils 40 kann die Pumpe 38 Hydraulikfluid aus dem Bremsflüssigkeitsbehälter 18 ansaugen. Die Pumpe 38 kann eine Radialkolbenpumpe sein, deren Förderleistung variabel ist, wobei die in Fig. 1 dargestellte Pumpe eine Radialkolbenpumpe mit sechs Kolben ist.

Die Isolationsventile 22, 24, 26, Druckabbauventile 34, 36 und Versorgungsventile 40 können zum Beispiel elektromagnetisch betätigbare 2/2-Wege-Ventile sein. Die Isolationsventile 22, 24, 26 sind in Normalstellung geöffnete Ventilanordnungen, die in Normalstellung (unbestromt) einen Durchfluss von Hydraulikfluid erlauben. Die Druckabbauventile 34, 36 und das Versorgungsventil 40 sind in Normalstellung geschlossene Ventilanordnungen, die in Normalstellung (unbestromt) einen Durchfluss von Hydraulikfluid verhindern. Jedoch ist es ebenso möglich, andere Ventile zum Erreichen der gleichen Wirkung zu verwenden.

Die Isolationsventile 22, 24, 26 und die Druckabbauventile 34, 36 können dazu eingerichtet sein, vollständig oder teilweise angesteuert zu werden. Bei einer teilweisen Ansteuerung der Ventile, reicht die Ansteuerenergie nicht aus, diese vollständig zu öffnen oder zu schließen. Der Ventile befinden sich daher in einem teilweise geöffneten Schaltzustand, so dass ein geringeres Hydraulikfluidvolumen über die Ventile abfließt als im vollständig geöffneten Schaltzustand.

Zudem ist in Fig. 1 eine Steuereinheit 48 dargestellt. Die Steuereinheit 48 ist mit den Isolationsventilen 22, 24, 26 den Druckabbauventilen 34, 36 und den Versorgungsventil 40 elektrisch leitend verbunden und dazu eingerichtet, diesen Ventilen Schaltzustände vorzugeben. Dieses Ansteuern der Ventile kann auch als Öffnen bzw. Schließen der Ventile bezeichnet werden. Die Steuereinheit 48 ist auch mit einem Motor der Pumpe 38 elektrisch leitend verbunden und dazu eingerichtet, die Förderleistung der Pumpe 38 vorzugeben. So kann zum Beispiel die Steuereinheit 48 ein Pulsweitenmodulationssignal (PWM-Signal) ausgeben und dadurch die Drehzahl der Pumpe 38 vorgeben. Aus Gründen der Übersichtlichkeit sind die jeweiligen elektrischen Verbindungen nicht dargestellt.

Ferner ist an dem Bremspedal 12 ein Pedalwegsensor 46 zum Erfassen der Betätigung des Bremspedals 12 angeordnet, wobei der Pedalwegsensor 46 ein der Betätigung des Bremspedals 12 entsprechendes Signal an die Steuereinheit 48 abgibt. Das Bremssystem kann weitere Komponenten, wie zum Beispiel Sensoren, aufweisen, wobei diese zum Verständnis des vorliegenden Bremssystems nicht zwingend erforderlich sind und hier aus Gründen der Übersichtlichkeit nicht dargestellt sind.

In Fig. 1 ist eine elektrische Maschine 50 angedeutet. Die elektrische Maschine 50 ist dazu eingerichtet, während eines Verzögerungsvorgangs kinetische Energie des Landfahrzeugs in elektrische Energie umzuwandeln. Somit erzeugt die elektrische Maschine 50 ein generatorisches Bremsmoment. Die elektrische Maschine 50 kann Teil des Antriebsstrangs des Landfahrzeugs sein. Ebenso kann die elektrische Maschine ein Generator sein, der unabhängig vom Antriebsstrang mit den Rädern des Landfahrzeugs gekoppelt ist und speziell zur Umwandlung von kinetischer Energie in elektrische Energie vorgesehen ist. Der Betrieb der elektrischen Maschine 50 wird durch ein Steuergerät 52 gesteuert. Das Steuergerät 52 ist mit der Steuereinheit 48 des Bremssystems verbunden. Entsprechend können Daten und / oder Steuersignale zwischen dem Steuergerät 52 der elektrischen Maschine und der Steuereinheit 48 des Bremssystems ausgetauscht werden. Neben zwei separaten Steuerungen für Bremssystem 10 und elektrische Maschine 50 kann auch ein eine gemeinsam Steuerung vorgesehen sein.

Das erste und das zweite Druckabbauventil 34, 36 sind derart ausgeführt, dass diese auch in ihrem vollständig geöffneten Schaltzustand den Fluss des Hydraulikfluids behindern. Entsprechend besitzen das erste und das zweite Druckabbauventil 34, 36 jeweils eine Drosselwirkung. Das Ausmaß der Drosselwirkung wird zum Beispiel durch die Ausformung des Ventilsitzes, die Größe der Ventilöffnung und eine eventuell vorhandene Querschnittsverengung des Druckabbauventils bestimmt, wobei eine kleine Ventilöffnung und eine starke Querschnittsverengung eine größere Drosselwirkung ergeben. In Abhängigkeit der jeweiligen Ausführung hat somit das erste Druckabbauventil 34 eine erste Drosselwirkung und das zweite Druckabbauventil 36 eine zweite Drosselwirkung. Die Drosselwirkung kann gleich oder unterschiedlich sein. Dabei kann ausgenutzt werden, dass die den Vorderrädern des Landfahrzeugs zugeordneten Radbremsen häufig größer ausgeführt sind als die den Hinterrädern zugeordneten Radbremsen. Dabei sind nicht nur die Radbremsen größer ausgeführt, sondern auch die jeweiligen Ventile für größere Durchflussvolumina ausgelegt.

Wegen der Drosselwirkung geht nach dem Öffnen der Druckabbauventile 34, 36 die Druckdifferenz zwischen dem in den Radbremsen 28, 30 anliegenden Bremsdruck und dem im Zwischenspeicher 42 anliegenden Druck nicht sofort auf null zurück. Vielmehr wird diese Druckdifferenz durch das Abfließen des Hydraulikfluids aus den Radbremsen 28, 30 reduziert. Somit nimmt der Bremsdruck in den Radbremsen 28, 30 durch das Öffnen der Druckabbauventile 34, 36 zwar ab, allerdings vergeht eine gewisse Zeit bis der Bremsdruck vollständig abgebaut wird. Die Geschwindigkeit des Druckabbaus wird dabei durch den Volumenstrom über die Druckabbauventile 34, 36 bestimmt und kann als Druckabbaugradient bezeichnet werden.

Bei einem regenerativen Bremsvorgang wird ein Teil des Gesamtbremsmoments durch das Bremssystem 10 und der andere Teil durch die elektrische Maschine 50 bereitgestellt. Damit der Ablauf des Bremsvorgangs für den Fahrer vorhersehbar bleibt und keine unerwarteten Effekte auftreten, sollte das aus hydraulischem Bremsmoment und generatorischen Bremsmoment zusammengesetzte Gesamtbremsmoment während des gesamten Bremsvorgangs dem durch die Betätigung des Bremspedals 12 vorgegebenen Bremswunsch des Fahrers entsprechen.

Bei dem in Figur 1 dargestellten Bremssystem 10 sind bei einem regenerativen Bremsvorgang die Isolationsventile 22, 24, 26 geöffnet. Dadurch bewirkt die Betätigung des Bremspedals 12 durch den Fahrer eine Volumenverschiebung von dem Hauptbremszylinder 16 zu den Radbremsen 28, 30. Entsprechend baut der Fahrer durch die Betätigung des Bremspedals 12 in den Radbremsen 28, 30 einen Bremsdruck und somit ein hydraulisches Bremsmoment auf.

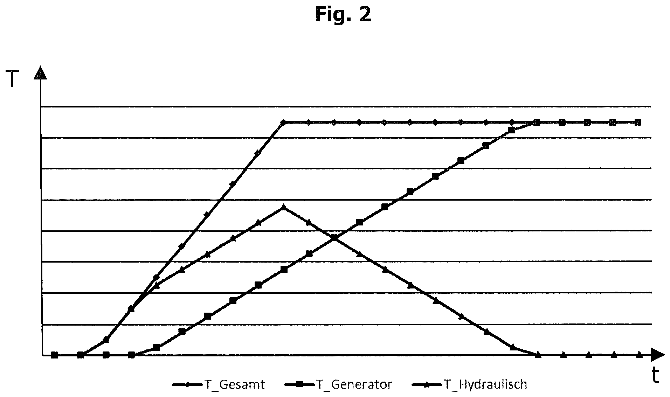

Gleichzeitig oder zeitversetzt zum Bremsdruckaufbau durch den Fahrer baut auch die elektrische Maschine 50 ein generatorisches Bremsmoment auf. Damit das Gesamtbremsmoment auch weiterhin dem Bremswunsch des Fahrers entspricht, initiiert die Steuereinheit einen dem Aufbau des generatorischen Bremsmoments entsprechende Reduzierung des hydraulischen Bremsmoments. Dies ist in Fig. 2 dargestellt. Dabei wird das hydraulische Bremsmoment, während des Aufbaus des Gesamtbremsmoments vermindert aufgebaut. Nachdem das Gesamtbremsmoment den gewünschten Wert erreicht hat, wird das hydraulische Bremsmoment entsprechend abgebaut. Das Ersetzen des hydraulischen Bremsmoments durch das generatorische Bremsmoment und umgekehrt kann auch als Blenden bezeichnet werden.

Um das hydraulische Bremsmoment abzubauen, öffnet die Steuereinheit 48 das erste und / oder das zweite Druckabbauventil 34, 36. Durch das Abfließen des Hydraulikfluids nimmt der Bremsdruck in den Radbremsen 28, 30 ab. Entsprechend wird das hydraulische Bremsmoment nicht in dem Maß aufgebaut, wie das Gesamtbremsmoment. Nachdem der durch den Fahrer vorgegebene Aufbau des Gesamtbremsmoments abgeschlossen ist, bewirkt das abfließende Hydraulikfluid einen Abbau des hydraulischen Bremsmoments.

Durch ein geeignetes Verändern der Schaltzustände der Druckabbauventile 34, 36 kann die Steuereinheit 48 die erste und die zweite Drosselwirkung nutzen, um den Bremsdruck in den Radbremsen 28, 30 in dem Maß vermindert aufzubauen oder abzubauen, in dem das generatorische Bremsmoment aufgebaut wird. Da die Drosselwirkung der Druckabbauventile 34, 36 den Druckabbau in den Radbremsen 28, 30 verzögert, können Totzeiten und / oder die Trägheit der elektrischen Maschine 50 beim Aufbau des generatorischen Bremsmoments gezielt kompensiert werden.

Da das hydraulische Bremsmoment vermindert aufgebaut wird, kann dem Fahrer weiterhin eine gewohnte Pedalrückwirkung bereitgestellt werden. Dies vermittelt dem Fahrer ein komfortables Bremsgefühl, auch ohne eine separate Pedalrückwirkungs-Simulationseinrichtung. Die Pedalrückwirkung des so gestalteten Bremssystems entspricht somit im Wesentlichen der Pedalrückwirkung konventioneller Bremssysteme oder ist dieser zumindest stark angenähert.

Da die Radbremsen 28, 30 über die Zuführleitung 20 miteinander verbunden sind, bewirkt das Öffnen eines der Druckabbauventile 34, 36 einen Druckabbau in beiden Radbremsen 28, 30. Wenn zum Beispiel die Steuereinheit 48 das erste Druckabbauventil 34 öffnet, fließt Hydraulikfluid aus der ersten Radbremse 28 direkt ab. Das Hydraulikfluid aus der zweiten Radbremse 30 fließt durch die Zuführleitung 20 und über das geöffnete erste Druckabbauventil 34 ab. Wenn nur eines der Druckabbauventile 34, 36 geöffnet wird, kann weniger Hydraulikfluid aus den Radbremsen 28, 30 zu dem Zwischenspeicher 42 abfließen. Daher erfolgt der Druckabbau in den Radbremsen 28, 30 langsamer, als wenn beide Druckabbauventile 34, 36 geöffnet wären. Entsprechend steht mehr Zeit für den Aufbau des generatorischen Bremsmoments zur Verfügung. Auch kann das Abfließen des Hydraulikfluids über ein Druckabbauventil genauer gesteuert werden. Somit kann die Steuereinheit 48 das Druckabbauventil öffnen, das einen Druckabbau bewirkt, der am ehesten den Aufbau des generatorischen Bremsmoments entspricht.

Durch den Druckabbau in den Radbremsen 28, 30 wird, wegen des nahezu konstanten Drucks im Zwischenspeicher 42, die Druckdifferenz über das geöffnete Druckabbauventil kleiner. Dies führt dazu, dass der Druckabbaugradient überproportional abnimmt, also der Druckabbau in den Radbremsen 28, 30 langsamer erfolgt. Daher kann die Steuereinheit 48 in einer ersten Phase des Druckabbaus das Druckabbauventil mit der größeren Drosselwirkung öffnen und in einer zweiten Phase des Druckabbaus das Druckabbauventil mit der größeren Drosselwirkung schließen und das Druckabbauventil mit der kleineren Drosselwirkung öffnen, wobei der Bremsdruck in der ersten Phase größer ist, als in der zweiten Phase.

Um die Geschwindigkeit des Druckabbaus zu variieren, kann die Steuereinheit 48 die Ventile mit einer Zu-Auf-Ansteuerung und / oder einer quasi analogen Ansteuerung ansteuern. Bei einer Zu-Auf-Ansteuerung wird das Ventil abwechselnd geöffnet und geschlossen, so dass der Mittelwert der Abflussmenge des Hydraulikfluids während der Zu-Auf-Ansteuerung im Vergleich zu einem vollständig geöffneten Ventil reduziert wird. Bei einer quasi analogen Ansteuerung wird das Ventil nur teilweise angesteuert, so dass sich dieses nur teilweise öffnet.

Eine weitere Möglichkeit, den Bremsdruck in den Radbremsen zu variieren, besteht darin, dass die Steuereinheit 48 der Pumpe 38 eine Förderleistung vorgibt. Dies bewirkt, dass die Pumpe 38 Hydraulikfluid aus dem Zwischenspeicher 42 zu den Radbremsen 28, 30 fördert. Durch die Volumenverschiebung von dem Zwischenspeicher 42 zu den Radbremsen 28, 30 kann der Druckabbau verlangsamt werden. Je größer die vorgegebene Förderleistung ist, desto mehr Hydraulikfluid wird zu den Radbremsen 28, 30 gefördert. Die Steuereinheit kann die Förderleistung derart vorgeben, dass in den Radbremsen 28, 30 der Druckabbau verlangsamt wird, der Druck konstant bleibt oder der Druck ansteigt. Durch einen Druckanstieg in den Radbremsen kann zum Beispiel ein Rückgang des generatorischen Bremsmoments ausgeglichen werden. Somit kann während des gesamten regenerativen Bremsvorgangs zumindest ein Druckabbauventil geöffnet sein.

Falls ein schneller Druckaufbau in den Radbremsen erforderlich ist, um einen plötzlichen Rückgang des generatorischen Bremsmoments zu kompensieren, kann das dritte Isolationsventil 26 geschlossen werden. Durch das Schließen des dritten Isolationsventils 26 kann der Hauptbremszylinder 16 von den Radbremsen 28, 30 isoliert werden. Entsprechend kann verhindert werden, dass der schnelle Druckaufbau in den Radbremsen, aufgrund einer starken Druckschwankung im Hauptbremszylinder 16, zu einer für den Fahrer wahrnehmbaren Rückwirkung am Bremspedal 12 führt.

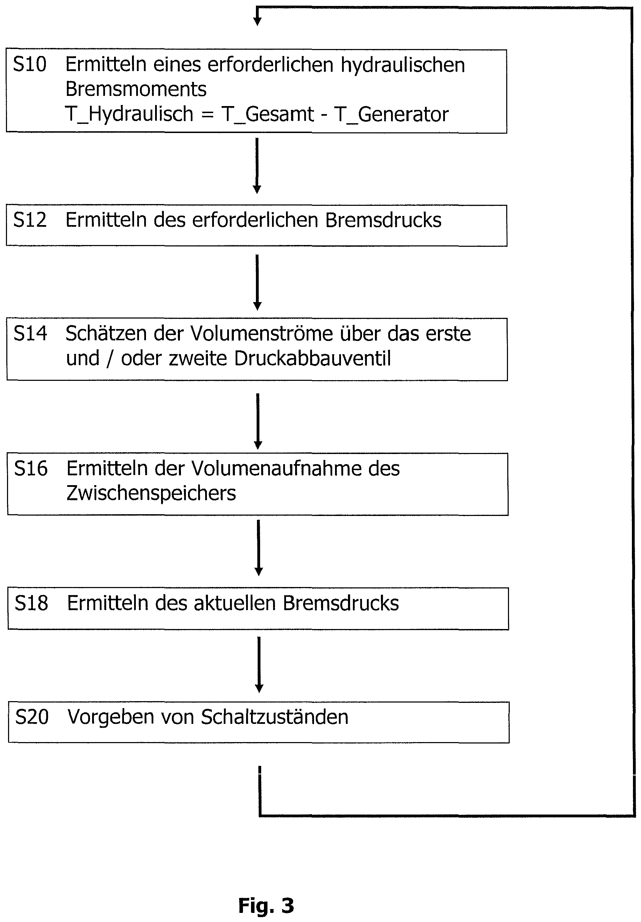

In Fig. 3 sind Schritte dargestellt, mit denen die Steuereinheit 48 ermitteln kann, ob ein Schaltzustandswechsel erforderlich ist. Diese Schritte können während des gesamten regenerativen Bremsvorgangs wiederholt werden. Die Abfolge in der die Schritte ausgeführt werden, ist nicht auf die in Fig. 3 dargestellte Abfolge festgelegt. Vielmehr kann die Abfolge variiert werden. Zudem ist es nicht erforderlich, bei jeder Wiederholung jeden Schritt auszuführen.

Die Steuereinheit 48 steuert den Bremsdruck in den Radbremsen 28, 30 in Abhängigkeit der Veränderung des generatorischen Bremsmoments. Dazu ermittelt die Steuereinheit 48 in Schritt S10 die Differenz zwischen einem vom Fahrer durch die Betätigung des Bremspedals 12 vorgegeben Gesamtbremsmoments und des generatorischen Bremsmoments. Diese Differenz entspricht dem erforderlichen hydraulischen Bremsmoment. Aus dem erforderlichen hydraulischen Bremsmoment ermittelt die Steuereinheit 48 einen erforderlichen Bremsdruck.

In Schritt S14 schätzt die Steuereinheit anhand der Schaltzustände sowie der ersten und zweiten Drosselwirkung den Volumenstrom über das erste und / oder das zweite Druckabbauventil 34, 36. Die erste und zweite Drosselwirkung können dabei als Parameter in einem Speicher der Steuereinheit 48 hinterlegt sein. Beim Schätzen des Volumenstroms über die Druckabbauventile kann die Steuereinheit 48 zudem eine vom Pedalwegsensor 46 ermittelte Auslenkung des Bremspedals 12 und die Geschwindigkeit der Auslenkung des Bremspedals 12 berücksichtigen. Zudem kann die Steuereinheit 48 für die Dauer eines Bremsvorgangs die Ventilschaltzustände und deren Dauer in dem Speicher der Steuereinheit 48 abspeichern. Die Ventilschaltzustände und deren Dauer kann die Steuereinheit 48 zum Beispiel aus den jeweiligen Ventilansteuerzeiten ermitteln.

Ausgehend von dem geschätzten Volumenstrom über das erste und / oder das zweite Druckabbauventil ermittelt die Steuereinheit 48 in Schritt S16 die Volumenaufnahme des Zwischenspeichers 42. Dazu kann die Steuereinheit 48 zum Beispiel die Federsteifigkeit der im Zwischenspeicher 42 enthaltenen Federn oder die Reibung in dem Zwischenspeicher 42 berücksichtigen, wobei entsprechende Parameter in dem Speicher der Steuereinheit 48 hinterlegt sind.

In Schritt S18 schätzt die Steuereinheit 48 anhand der vom Pedalwegsensor 46 erfassten Auslenkung des Bremspedals 12 und anhand der berechneten Volumenaufnahme des Zwischenspeichers 42 einen aktuellen Bremsdruck.

In Abhängigkeit des aktuellen Bremsdrucks und des erforderlichen Bremsdrucks ermittelt die Steuereinheit 48 in Schritt S20, ob ein Anpassen des Bremsdrucks oder ein Anpassen der Geschwindigkeit der Druckveränderung in den Radbremsen 28, 30 erforderlich ist. Wenn die Geschwindigkeit der Druckveränderung nicht mehr geeignet ist, eine Veränderung des generatorischen Bremsmoments zu kompensieren, kann die Steuereinheit 48 den Druckabbauventilen 34, 36 andere Schaltzustände vorgeben und / oder der Pumpe 38 eine Förderleistung vorgeben.

Die Steuereinheit 48 kann die Schaltzustände der Druckabbauventile 34, 36 derart vorgeben, dass in der Regel nur eines der Druckabbauventile geöffnet ist. Zudem kann die Vorgabe der Schaltzustände derart erfolgen, dass während eines regenerativen Bremsvorgangs möglichst wenig Wechsel der Schaltzustände erforderlich sind. Dabei erfolgen die Wechsel der Schaltzustände der Druckabbauventile 34, 36 niederfrequent und unsymmetrisch. Dabei bedeutet niederfrequent, dass zum Beispiel weniger Schaltzustandswechsel als bei einem Regelvorgang eines Schlupfregelsystems erforderlich sind. So können zum Beispiel weniger als 5 Schaltzustandswechsel pro Sekunde vorgesehen sein. Unsymmetrische Schaltzustandswechsel bedeuten, dass das erste und zweite Druckabbauventil nicht gleichzeitig sondern zeitversetzt und / oder unregelmäßig angesteuert werden. So kann zum Beispiel, wenn die Steuereinheit 48 für zwei Ventile einen Schaltzustandswechsel vorgibt, die Steuereinheit 48 das zweite Ventil ansteuern, nachdem der Schaltzustandswechsel des ersten Ventils beendet ist. Somit können die durch die Wechsel der Schaltzustände erzeugten Geräusche reduziert werden.

Der Bremskraftverstärker 14 des Bremssystems 10 ist dazu eingerichtet, dass der Druckaufbau im Hauptbremszylinder 16 bis zu einer ersten Auslenkung des Bremspedals 12 nur durch die Auslenkung des Bremspedals 12 bestimmt wird, also eine Pedalwegsteuerung vorliegt. Die erste Auslenkung kann zum Beispiel 45 mm betragen. Der Druck im Hauptbremszylinder 16 kann bei der ersten Auslenkung zum Beispiel ungefähr 10 - 30 bar betragen. Der exakte Druck ergibt sich dabei durch die jeweilige Implementierung des Bremskraftverstärkers 14, so dass bei der ersten Auslenkung der Druck jeden Wert innerhalb des genannten Bereichs annehmen kann. Ebenso kann der Druck im Hauptbremszylinder innerhalb von Toleranzgrenzen schwanken, so dass der Druck im Hauptbremszylinder innerhalb von Unterbereichen schwanken kann. So kann der Druck zum Beispiel 20 - 25 bar betragen. Es sind jedoch auch andere Unterbereiche wie zum Beispiel 15 - 25 bar, 20 - 30 bar oder 10 - 20 bar möglich. Der Übergang von der Pedalwegsteuerung zu einer Kraftsteuerung kann auch als Einsprung des Bremskraftverstärkers 14 bezeichnet werden.

Bis zur ersten Auslenkung oder dem entsprechenden Druck im Hauptbremszylinder 16 spürt der Fahrer noch keine durch den Druck im Hauptbremszylinder 16 hervorgerufene Pedalkraftrückwirkung. So ist der Kolben des Hauptbremszylinders 16 bis zur ersten Auslenkung über die Fühlscheibe des Bremskraftverstärkers 14 am Ventilgehäuse des Bremskraftverstärkers 14 abgestützt und nicht über die Pedaleingangsstange des Bremskraftverstärkers 14.

Bei einem Bremsvorgang bewirkt ein Auslenken des Bremspedals 12 ein Öffnen des Boosterventils des Bremskraftverstärkers 14. Durch das geöffnete Boosterventil strömt Luft mit Umgebungsdruck in die Arbeitskammer des Bremskraftverstärkers 14. Die einströmende Luft verändert das Druckgleichgewicht zwischen den Kammern des Bremskraftverstärkers 14, so dass der an der Fühlscheibe abgestützte Kolben des Hauptbremszylinders 16 von dem Bremskraftverstärker 14 weg geschoben wird. Dies bewirkt den Druckaufbau im Hauptbremszylinder 16. Bei gleichbleibender Betätigung des Bremspedals 12 durch den Fahrer, also wenn die Auslenkung des Bremspedals 12 nicht verändert wird, ist das Boosterventil des Bremskraftverstärkers 14 geschlossen. Entsprechend stellt sich bei gleichbleibender Betätigung des Bremspedals wieder ein Druckgleichgewicht zwischen den Kammern des Bremskraftverstärkers ein.

Bei einem regenerativen Bremsvorgang wird durch das Öffnen der Druckabbauventile 34, 36 der Bremsdruck in den Radbremsen 28, 30 und über die geöffneten Isolationsventile 22, 24, 26 der Druck im Hauptbremszylinder 16 allmählich auf das Druckniveau des Zwischenspeichers 42 reduziert. Durch den Rückgang der Abstützkraft des Hauptbremszylinderkolbens wird das Druckgleichgewicht zwischen den Kammern des Bremskraftverstärkers 14 gestört. Entsprechend wird das Ventilgehäuse des Bremskraftverstärkers 14 weiter in Richtung des Hauptbremszylinderkolbens verschoben. Durch das Verschieben des Ventilgehäuses des Bremskraftverstärkers wird das Volumen der Arbeitskammer vergrößert. Da das Boosterventil geschossen ist, kann keine zusätzliche Luft in die Arbeitskammer strömen. Somit bewirkt die durch die Verschiebung des Ventilgehäuses bedingte Volumenvergrößerung der Arbeitskammer einen Druckrückgang in der Arbeitskammer. Daher wird das Ventilgehäuse so weit in Richtung des Hauptbremszylinderkolbens verschoben, bis sich wieder ein Druckgleichgewicht zwischen den Kammern des Bremskraftverstärkers einstellt.

Somit wird auch bei geöffneten Druckabbauventilen 34, 36 verhindert, dass der Fahrer das Gefühl hat, das Bremspedal 12 leer durchzudrücken. Eine zusätzliche Vorrichtung, um für den Fahrer eine gewohnte Pedalrückwirkungskraft zu simulieren, ist nicht notwendig. Zudem können die Isolationsventile 22, 24, 26 zumindest bis zum Einsprung des Bremskraftverstärkers 14 geöffnet bleiben. Da somit kein Wechsel der Schaltzustände der Isolationsventile 22, 24 erforderlich ist, kann die Anzahl der Schaltzustandswechsel und damit die Geräuschentwicklung reduziert werden.

Um die Rückwirkung des Bremspedals für den Fahrer komfortabler zu gestalten, kann eine Pedalsimulation vorgesehen sein, also eine Vorrichtung durch die die Rückwirkung des Bremspedals 12 verändert wird. Die Pedalsimulation kann zum Beispiel eine Pedalansprechkraft von 22N bereitstellen, das heißt, dass der Fahrer zum Auslenken des Bremspedals 12 aus der Ausgangsposition mindestens eine Kraft von 22N aufbringen muss. Bis zur ersten Auslenkung kann durch die Pedalsimulation die Rückstellkraft des Bremspedals auf 30N erhöht werden. Da bis zur ersten Auslenkung keine Rückwirkungen des Hauptbremszylinders 16 über den Bremskraftverstärker übertragen werden, muss die Erhöhung der Bremspedalrückstellkraft unabhängig von der Hauptzylinderrückwirkung, zum Beispiel durch einen Feder oder einen Dämpfer, erfolgen.

Eine weitere Möglichkeit, um den Fahrer ein komfortables Bremsgefühl zu vermitteln und um Pedalrückwirkungen in Folge von Bremsdruckveränderung zu vermeiden, besteht darin, das erste und zweite Isolationsventil 22, 24 nach oder während des Druckaufbaus durch die Betätigung des Bremspedals 12 teilweise zu schließen. Durch das teilweise Schließen des ersten und zweiten Isolationsventils 22, 24 kann im Vergleich zu einem vollständig geöffneten Isolationsventil die Volumenverschiebung über die Isolationsventile reduziert werden. Somit kann die Steuereinheit 48 dem ersten und zweiten Isolationsventil 22, 24 eine gewünschte Drosselwirkung vorgeben. Da diese Drosselwirkung im Wesentlichen vom Grad der Ansteuerung durch die Steuereinheit 48 bestimmt wird, kann die Drosselwirkung des ersten und zweiten Isolationsventils 22, 24 auch als analog einstellbare Drosselwirkung bezeichnet werden.

Die Steuereinheit 48 kann die analog einstellbare Drosselwirkung der Isolationsventile 22, 24 in Abhängigkeit des Verlaufs des regenerativen Bremsvorgangs vorgeben. So kann die Steuereinheit 48 die Drosselwirkung in Abhängigkeit davon vorgeben, ob generatorische Bremsmoment aufgebaut, konstant gehalten oder abgebaut wird. Zudem können die Isolationsventile 22, 24 derart angesteuert werden, dass eine zunehmende Auslenkung des Bremspedals 12 zu einem zunehmenden Schließen der Isolationsventile 22, 24 führt. Desweitern können bei zurückgehendem Bremsmomentdefizit, also wenn die Differenz zwischen dem Gesamtbremsmoment und generatorischen Bremsmoment kleiner wird, die Isolationsventile 22, 24 wieder etwas geöffnet werden.

Durch das teilweise Schließen der Isolationsventile 22, 24 kann dem Fahrer ein gewohntes Bremsgefühl vermittelt werden. Insbesondere verhindert die von der Steuereinheit 48 eingestellte Drosselwirkung, dass dem Fahrer das Gefühl vermittelt wird, er würde das Bremspedal leer durchdrücken. Zudem erfolgt das teilweise Schließen der Isolationsventile 22, 24 weitestgehend ohne Geräuschentwicklung.

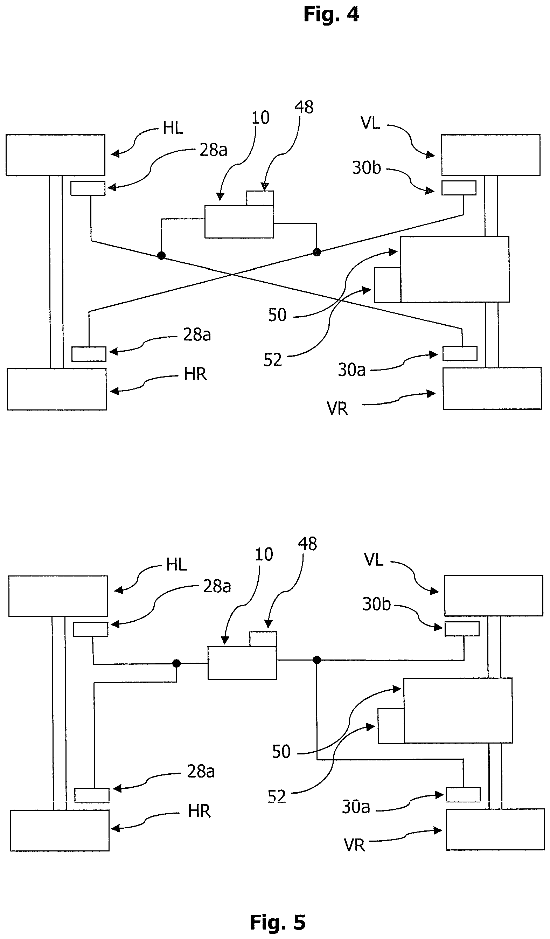

In den Fig. 4 und 5 sind Landfahrzeuge schematisch angedeutet. Den Rädern vorne links (VL), vorne rechts (VR), hinten links (HL) und hinten rechts (HR) ist jeweils eine Radbremse (28a, 28b, 30a, 30b) zugeordnet. Die Radbremsen (28a, 28b, 30a, 30b) sind zwei Bremskreisen zugeordnet. In der Fig. 4 ist eine diagonale Aufteilung, auch X-Aufteilung genannt, dargestellt. In Fig. 5 ist eine schwarz-weiß-Aufteilung dargestellt. Zudem sind in den Fig. 4 und 5 das Bremssystem 10, die Steuereinheit 48, die elektrische Maschine 50 und das Steuergerät 52 dargestellt, wobei die elektrische Maschine 50 mit der Vorderachse des Landfahrzeugs verbunden ist.

Die in den Fig. 4 und 5 dargestellten elektrischen Maschinen 50 und elektrischen Steuergeräte 52 können dazu eingerichtet sein, dass der Aufbau eines generatorischen Bremsmoments in Abhängigkeit der Drosselwirkung des ersten und / oder zweiten Druckabbauventils 34, 36 erfolgt. Also der Aufbau des generatorischen Bremsmoments ungefähr in dem Maß erfolgt, in dem der Druck in den Radbremsen durch das Abfließen des Hydraulikfluids über das erste und / oder das zweite Druckabbauventil 34, 36 abnimmt. Dadurch kann die Anzahl der erforderlichen Schaltzustandswechsel weiter reduziert werden.

Bei der in Fig. 5 dargestellten schwarz-weiß-Aufteilung der Bremskreise kann vorgesehen sein, dass nur die Radbremsen der Achse gebremst werden, die nicht mit generatorischen Bremsmoment beaufschlagt wird. Bei dem in Fig. 5 dargestellten Landfahrzeug wird die vordere Achse des Landfahrzeugs mit dem generatorischen Bremsmoment beaufschlagt, so dass nur die der Hinterachse zugeordneten Radbremsen mit Bremsdruck beaufschlagt werden. Da der Aufbau des generatorischen Bremsmoments in der Regel verzögert erfolgt, ist die von der elektrischen Maschine 50 abgebremste Achse zu Beginn des Bremsvorgangs ungebremst. Um das durch den verzögerten Aufbau des generatorischen Bremsmoments verursachten Bremsmomentdefizit zu kompensieren, kann der Bremsdruck in den Radbremsen der hydraulisch gebremsten Achse erhöht werden. Dazu kann zum Beispiel die Pumpe 38 während des vom Fahrer bewirkten Bremsdruckaufbaus zusätzliches Hydraulikfluid zu den Radbremsen fördern. Diese Art der Aufteilung des Bremskreises und der Ansteuerung ermöglicht es, dass die von der elektrischen Maschine gebremste Achse von Beginn an drucklos bleibt und der Bremsdruck in der anderen Achse beim Einsetzen des generatorischen Moments durch die in Verbindung mit Fig. 1 beschriebene Bremsdruckregelung angepasst werden kann.

Die vorangehend beschriebenen Varianten dienen lediglich dem besseren Verständnis der Struktur, der Funktionsweise und der Eigenschaften der Bremssysteme; sie schränken die Offenbarung nicht etwa auf die Ausführungsbeispiele ein. Die Figuren sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/ welche in den Figuren oder im Text offenbart ist/ sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem beschriebenen Bremssystem zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen unterschiedlichen Varianten im Text, in den Ansprüchen und den Figuren umfasst.

Auch die Ansprüche limitieren nicht die Offenbarung und damit die Kombinationsmöglichkeiten aller aufgezeigten Merkmale untereinander. Alle offenbarten Merkmale sind explizit sowohl einzeln als auch in Kombination mit allen anderen Merkmalen hier offenbart.

## Patentansprüche

1. Hydraulisches Bremssystem (10) für ein Landfahrzeug, wobei das hydraulische Bremssystem (10) dazu eingerichtet ist, einen regenerativen Bremsvorgang des Landfahrzeugs zu ermöglichen, mit
- einem vom Fahrer betätigbaren Bremspedal (12);
- einer Radbremse (28, 30), die einem Rad des Landfahrzeugs zugeordnet ist;
- einem Hauptbremszylinder (16), der über einen Bremskraftverstärker (14) mit dem Bremspedal (12) verbunden ist und dazu eingerichtet ist, bei einer Betätigung des Bremspedals (12) Hydraulikfluid in die Radbremse (28, 30) zu verschieben;
- einer Pumpe (38), deren Ausgang über eine Zuführleitung (20, 20a, 20b) mit der Radbremse (28, 30) und deren Eingang über eine Rückführleitung (32, 32a, 32b) mit der Radbremse (28, 30) verbunden ist, wobei die Pumpe (38) dazu eingerichtet ist, Hydraulikfluid zu der Radbremse (28, 30) zu fördern;
- einem über die Rückführleitung (32, 32a, 32b) mit dem Eingang der Pumpe (38) und der Radbremse (28, 30) verbundenen Zwischenspeicher (42);
- einem Druckabbauventil (34, 36), das in der Rückführleitung (32a, 32b) der Radbremse (28) angeordnet ist und im geöffneten Zustand eine Drosselwirkung aufweist;
- einer Steuereinheit (48), die dazu eingerichtet ist, während eines regenerativen Bremsvorgangs des Landfahrzeugs die Differenz zwischen einem vom Fahrer durch die Betätigung des Bremspedals (12) vorgegebenen Gesamtbremsmoment und einem von einer elektrischen Maschine (50) bereitgestellten generatorischen Bremsmoment durch ein Einstellen des hydraulischen Bremsmoments auszugleichen, wobei die Steuereinheit (48) zum Einstellen des hydraulischen Bremsmoments
- eine Differenz zwischen dem Gesamtbremsmoment und dem generatorischen Bremsmoment ermittelt;
- aus der Differenz des Gesamtbremsmoments und des generatorischen Bremsmoments einen erforderlichen Bremsdruck ermittelt;
- Volumenströme über das Druckabbauventil (34, 36) anhand des Schaltzustands und der Drosselwirkung des Druckabbauventils (34, 36) schätzt;
- eine Volumenaufnahme des Zwischenspeichers (42) anhand des geschätzten Volumenstroms ermittelt;
- einen aktuellen Bremsdruck anhand einer einem Betätigungsweg des Bremspedals (12) entsprechenden Volumenverschiebung von dem Hauptbremszylinder (16) zu der Radbremse (28, 30) und anhand der ermittelten Volumenaufnahme des Zwischenspeichers (42) schätzt; und
- in Abhängigkeit des ermittelten erforderlichen Bremsdrucks und des aktuellen Bremsdrucks dem Druckabbauventil (34, 36) einen Schaltzustand vorgibt.

2. Hydraulisches Bremssystem (10) nach Anspruch 1, wobei das hydraulische Bremssystem zwei, drei, vier oder mehr Radbremsen (28, 30) mit jeweiligen Druckabbauventilen (34, 36) umfasst, wobei die Radbremsen (28, 30) zumindest zu einem Bremskreis zusammengefasst sind, und wobei die Steuereinheit (48) zum Einstellen des hydraulischen Bremsmoments ferner dazu eingerichtet ist, für jeden Bremskreis die Volumenströme über die Druckabbauventile (34, 36) anhand der jeweiligen Schaltzustände und Drosselwirkungen zu schätzen, und in Abhängigkeit des ermittelten erforderlichen Bremsdrucks und des aktuellen Bremsdrucks den Druckabbauventilen (34, 36) Schaltzustände vorzugeben.

3. Hydraulisches Bremssystem (10) nach Anspruch 1 oder 2, wobei die Steuereinheit (48) ferner dazu eingerichtet ist, wenn die durch das geöffnete Druckabbauventil (34, 36) bedingte Veränderung des hydraulischen Bremsmoments alleine nicht zum Ausgleich der Differenz zwischen Gesamtbremsmoment und generatorischen Bremsmoment ausreicht, der Pumpe (38) eine Förderleistung derart vorzugeben, dass der aktuelle Bremsdruck dem erforderlichen Bremsdruck entspricht.

4. Hydraulisches Bremssystem (10) nach Anspruch 3, wobei die von der Steuereinheit (48) vorgegebene Förderleistung einer Volumenverschiebung zu den Radbremsen (28, 30) entspricht, die kleiner, gleich oder größer als die Volumenverschiebung über das geöffnete Druckabbauventil (34, 36) ist.

5. Hydraulisches Bremssystem (10) nach einem der Ansprüche 1 bis 4, mit einem ersten Isolationsventil (22) und einem zweiten Isolationsventil (24), wobei das erste und das zweite Isolationsventil (22, 24) dazu eingerichtet sind, die Zuführleitung (20a, 20b) zu der ersten beziehungsweise zweiten Radbremse (28, 30) vollständig oder teilweise zu sperren.

6. Hydraulisches Bremssystem (10) nach Anspruch 5, wobei die Steuereinheit (48) ferner dazu eingerichtet ist, während des regenerativen Bremsvorgangs das erste und zweite Isolationsventil (22, 24) vollständig oder teilweise zu schließen.

7. Hydraulisches Bremssystem (10) nach Anspruch 5, wobei die Steuereinheit (48) ferner dazu eingerichtet ist, bis zum Einsprung des Bremskraftverstärkers (14), das erste und zweite Insolationsventil (22, 24) nicht zu schließen.

8. Hydraulisches Bremssystem (10) nach einem der Ansprüche 1 bis 7, wobei die Steuereinheit (48) und die Druckabbauventile (34, 36) dazu eingerichtet sind, dass die Steuereinheit (48) die Drosselwirkung des Druckabbauventils (34, 36) mit einem abwechselnden Öffnen und Schließen oder einem teilweisen Öffnen des Druckabbauventils (34, 36) variiert.

9. Landfahrzeug mit einem in den vorhergehenden Ansprüchen definierten hydraulischen Bremssystem (10), einer elektrischen Maschine (50) und einem der elektrischen Maschine (50) zugeordneten Steuergerät (52), wobei das Steuergerät (52) den Aufbau des generatorischen Bremsmoments der elektrischen Maschine (52) in Abhängigkeit eines durch die Drosselwirkung bestimmten Druckabbaugradienten steuert.

10. Verfahren zum Steuern eines hydraulischen Bremssystems während eines regenerativen Bremsvorgangs, wobei eine Steuereinheit in Reaktion auf einen Bremswunsch des Fahrers
- eine Differenz zwischen einem Gesamtbremsmoment und einem von einer elektrischen Maschine bereitgestellten generatorischen Bremsmoment ermittelt, wobei das Gesamtbremsmoment dem vom Fahrer vorgegebenen Bremswunsch entspricht;
- aus der Differenz des Gesamtbremsmoments und des generatorischen Bremsmoments einen erforderlichen Bremsdruck ermittelt;
- einen Volumenstrom über ein Druckabbauventil anhand des Schaltzustands und der Drosselwirkung des Druckabbauventils schätzt;
- eine Volumenaufnahme eines Zwischenspeichers anhand des geschätzten Volumenstroms ermittelt;
- einen aktuellen Bremsdruck anhand einer einem Betätigungsweg des Bremspedals entsprechenden Volumenverschiebung von einem Hauptbremszylinder zu einer Radbremse und anhand der berechneten Volumenaufnahme des Zwischenspeichers schätzt; und
- in Abhängigkeit des ermittelten erforderlichen Bremsdrucks und des aktuellen Bremsdrucks ein Öffnen des Druckabbauventils bewirkt.

11. Computerlesbarer Datenträger, auf dem ein Computerprogrammprodukt gespeichert ist, das wenn es von einer Steuereinheit eines Bremssystems ausgeführt wird, das in den vorhergehenden Anspruch definierten Verfahren ausführt.

## Claims

1. Hydraulic brake system (10) for a land vehicle, wherein the hydraulic brake system (10) is adapted to enable a regenerative braking operation of said land vehicle, said system having:
- a brake pedal (12) which can be actuated by the driver;
- a wheel brake (28, 30) which is associated with a wheel of the land vehicle;
- a master brake cylinder (16) which is connected to the brake pedal (12) via a brake booster (14) and is adapted to displace hydraulic fluid into the wheel brake (28, 30) when the brake pedal (12) is actuated;
- a pump (38), the output of which is connected to the wheel brake (28, 30) via a feed line (20, 20a, 20b) and the input of which is connected to the wheel brake (28, 30) via a return line (32, 32a, 32b), wherein the pump (38) is adapted to convey hydraulic fluid to the wheel brake (28, 30);
- a temporary store (42) which is connected, via the return line (32, 32a, 32b), to the input of the pump (38) and to the wheel brake (28, 30);
- a pressure reduction valve (34, 36) which is arranged in the return line (32a, 32b) of the wheel brake (28) and has a throttling effect in the open state;
- a control unit (48) which is adapted to compensate, during a regenerative braking operation of the land vehicle, for the difference between a total braking torque set by the driver by actuation of the brake pedal (12) and a generating braking torque provided by an electric machine (50) by adjustment of the hydraulic braking torque, wherein the control unit (48), for the purpose of adjusting the hydraulic braking torque:
- ascertains a difference between the total braking torque and the generating braking torque;
- ascertains a necessary braking pressure from the difference of the total braking torque and the generating braking torque;
- estimates volume flows via the pressure reduction valve (34, 36) on the basis of the switching state and the throttling effect of said pressure reduction valve (34, 36);
- ascertains an intake of volume by the temporary store (42) on the basis of the estimated volume flow;
- estimates a current braking pressure on the basis of a displacement of volume, which displacement corresponds to an actuating travel of the brake pedal (12), from the master brake cylinder (16) to the wheel brake (28, 30), and on the basis of the ascertained intake of volume by the temporary store (42); and
- sets a switching state for the pressure reduction valve (34, 36) in dependence upon the ascertained necessary braking pressure and the current braking pressure.

2. Hydraulic brake system (10) according to claim 1, wherein said hydraulic brake system comprises two, three, four or more wheel brakes (28, 30), with pressure reduction valves (34, 36) in each case, wherein the wheel brakes (28, 30) are combined to at least form one brake circuit, and wherein the control unit (48) for adjusting the hydraulic braking torque may be further adapted to estimate, for each brake circuit, the volume flows via the pressure reduction valves (34, 36) on the basis of the respective switching states and throttling effects, and to set switching states for said pressure reduction valves (34, 36) in dependence upon the ascertained necessary braking pressure and the current braking pressure.

3. Hydraulic brake system (10) according to claim 1 or 2, wherein the control unit (48) is also adapted to set, if the change in hydraulic braking torque caused by the open pressure reduction valve (34, 36) is not sufficient, on its own, to compensate for the difference between the total braking torque and the generating braking torque, a delivery output for the pump (38) in such a way that the current braking pressure corresponds to the necessary braking pressure.

4. Hydraulic brake system (10) according to claim 3, wherein the delivery output set by the control unit (48) corresponds to a displacement of volume to the wheel brakes (28, 30), which displacement is smaller than, equal to or greater than the displacement of volume via the open pressure reduction valve (34, 36).

5. Hydraulic brake system (10) according to one of claims 1 to 4, having a first isolating valve (22) and a second isolating valve (24), wherein said first and said second isolating valve (22, 24) are adapted to completely or partially shut off the feed line (20a, 20b) to the first or second wheel brake (28, 30) respectively.

6. Hydraulic brake system (10) according to claim 5, wherein the control unit (48) is also adapted to completely or partially close the first and the second isolating valve (22, 24) during the regenerative braking operation.

7. Hydraulic brake system (10) according to claim 5, wherein the control unit (48) is also adapted not to close the first and the second isolating valve (22, 24) until the intervention of the brake booster (14) occurs.

8. Hydraulic brake system (10) according to one of claims 1 to 7, wherein the control unit (48) and the pressure reduction valves (34, 36) are adapted in such a way that the control unit (48) varies the throttling effect of the pressure reduction valve (34, 36) by the alternating opening and closing, or partial opening, of said pressure reduction valve (34, 36).

9. Land vehicle having a brake system (10) which is defined in the preceding claims, an electric machine (50) and a control apparatus (52) associated with said electric machine (50), wherein the control apparatus (52) controls the building-up of the generating braking torque of the electric machine (52) in dependence upon a pressure reduction gradient which is determined by the throttling effect.

10. Method for controlling a hydraulic brake system during a regenerative braking operation, wherein, in reaction to a desire to brake on the part of the driver, a control unit:
- ascertains a difference between a total braking torque and a generating braking torque provided by an electric machine, wherein the total braking torque corresponds to the desire to brake set by the driver;
- ascertains a necessary braking pressure from the difference in the total braking torque and the generating braking torque;
- estimates a volume flow via a pressure reduction valve on the basis of the switching state and the throttling effect of said pressure reduction valve;
- ascertains an intake of volume by a temporary store on the basis of the estimated volume flow;
- estimates a current braking pressure on the basis of a displacement of volume, which displacement corresponds to an actuating travel of the brake pedal, from a master brake cylinder to a wheel brake, and on the basis of the calculated intake of volume by the temporary store; and
- brings about an opening of the pressure reduction valve in dependence upon the ascertained necessary braking pressure and the current braking pressure.

11. Computer-readable data-carrier on which there is stored a computer-programming product which, when executed by a control unit of a brake system, executes the method defined in the preceding claim.

## Revendications

1. Système de freinage hydraulique (10) pour un véhicule terrestre, le système de freinage hydraulique (10) étant conçu pour permettre un freinage régénératif du véhicule terrestre, comprenant
- une pédale de frein (12) actionnable par le conducteur ;
- un frein de roue (28, 30) associé à une roue du véhicule terrestre ;
- un maître-cylindre de frein (16) relié à la pédale de frein (12) par l'intermédiaire d'un amplificateur de force de freinage (14) et conçu pour déplacer un fluide hydraulique vers le frein de roue (28, 30) lors d'un actionnement de la pédale de frein (12) ;
- une pompe (38) dont la sortie est reliée au frein de roue (28, 30) par l'intermédiaire d'une conduite d'alimentation (20, 20a, 20b) et dont l'entrée est reliée au frein de roue (28, 30) par l'intermédiaire d'une conduite de retour (32, 32a, 32b), la pompe (28) étant conçue pour transporter du fluide hydraulique vers le frein de roue (28, 30) ;
- un réservoir intermédiaire (42) relié par l'intermédiaire de la conduite de retour (32, 32a, 32b) à l'entrée de la pompe (38) et au frein de roue (28, 30) ;
- un réducteur de pression (34, 36) disposé dans la conduite de retour (32a, 32b) du frein de roue (28, 30) et exerçant une action d'étranglement à l'état ouvert ;
- une unité de commande (48) conçue, pendant un freinage régénératif du véhicule terrestre, pour compenser la différence entre un couple de freinage total prescrit par le conducteur en actionnant la pédale de frein (12) et un couple de freinage générateur fourni par une machine électrique (50) par un réglage du couple de freinage hydraulique, sachant que pour régler le couple de freinage hydraulique, l'unité de commande (48)
- détermine une différence entre le couple de freinage total et le couple de freinage générateur ;
- détermine une pression de freinage nécessaire à partir de la différence entre le couple de freinage total et le couple de freinage générateur ;
- estime des débits volumiques via le réducteur de pression (34, 36) à l'aide de l'état de commutation et de l'action d'étranglement du réducteur de pression (34, 36) ;
- détermine une absorption de volume du réservoir intermédiaire (42) à l'aide du débit volumique estimé ;
- estime une pression de freinage actuelle à l'aide d'un déplacement de volume du maître-cylindre de frein (16) vers le frein de roue (28, 30) correspondant à une course d'actionnement de la pédale de frein (12) et à l'aide de l'absorption de volume déterminée du réservoir intermédiaire (42) ; et
- prescrit au réducteur de pression (34, 36) un état de commutation en fonction de la pression de freinage nécessaire déterminée et de la pression de freinage actuelle.

2. Système de freinage hydraulique (10) selon la revendication 1, dans lequel le système de freinage hydraulique comprend deux, trois, quatre ou plus freins de roue (28, 30) avec des réducteurs de pression (34, 36) respectifs, les freins de roue (28, 30) étant réunis au moins en un circuit de freinage, et l'unité de commande (48) étant en outre conçue, afin de régler le couple de freinage hydraulique, pour estimer, pour chaque circuit de freinage, les débits volumiques via les réducteurs de pression (34, 36) à l'aide des états de commutation et actions d'étranglement respectifs, et pour prescrire aux réducteurs de pression (34, 36) des états de commutation en fonction de la pression de freinage nécessaire déterminée et de la pression de freinage actuelle.

3. Système de freinage hydraulique (10) selon la revendication 1 ou 2, dans lequel l'unité de commande (48) est en outre conçue, lorsque la modification du couple de freinage hydraulique produite par le réducteur de pression (34, 36) ouvert ne suffit pas à elle seule pour compenser la différence entre le couple de freinage total et le couple de freinage générateur, pour prescrire à la pompe (38) une capacité de refoulement de telle sorte que la pression de freinage actuelle corresponde à la pression de freinage nécessaire.

4. Système de freinage hydraulique (10) selon la revendication 3, dans lequel la capacité de refoulement prescrite par l'unité de commande (48) correspond à un déplacement de volume vers les freins de roue (28, 30) qui est inférieur, égal ou supérieur au déplacement de volume via le réducteur de pression (34, 36) ouvert.

5. Système de freinage hydraulique (10) selon l'une des revendications 1 à 4, comprenant une première vanne d'isolement (22) et une deuxième vanne d'isolement (24), les première et deuxième vannes d'isolement (22, 24) étant conçues pour couper complètement ou partiellement la conduite d'alimentation (20a, 20b) vers le premier, respectivement deuxième frein de roue (28, 30).

6. Système de freinage hydraulique (10) selon la revendication 5, dans lequel l'unité de commande (48) est en outre conçue, pendant le freinage régénératif, pour fermer complètement ou partiellement les première et deuxième vannes d'isolement (22, 24).

7. Système de freinage hydraulique (10) selon la revendication 5, dans lequel l'unité de commande (48) est en outre conçue pour ne pas fermer les première et deuxième vannes d'isolement (22, 24) jusqu'à l'intervention de l'amplificateur de force de freinage (14).

8. Système de freinage hydraulique (10) selon l'une des revendications 1 à 7, dans lequel l'unité de commande (48) et les réducteurs de pression (34, 36) sont conçus de telle manière que l'unité de commande (48) fait varier l'action d'étranglement du réducteur de pression (34, 36) par une ouverture et une fermeture alternées ou une ouverture partielle du réducteur de pression (34, 36).

9. Véhicule terrestre pourvu d'un système de freinage hydraulique (10) défini dans les revendications précédentes, d'une machine électrique (50) et d'un module de commande (52) associé à la machine électrique (50), le module de commande (52) commandant le développement du couple de freinage générateur de la machine électrique (52) en fonction d'un gradient de diminution de pression déterminé par l'action d'étranglement.

10. Procédé de commande d'un système de freinage hydraulique pendant un freinage régénératif, dans lequel une unité de commande, en réaction à une demande de freinage du conducteur,
- détermine une différence entre un couple de freinage total et un couple de freinage générateur fourni par une machine électrique, le couple de freinage total correspondant à la demande de freinage prescrite par le conducteur ;
- détermine une pression de freinage nécessaire à partir de la différence entre le couple de freinage total et le couple de freinage générateur ;
- estime un débit volumique via un réducteur de pression à l'aide de l'état de commutation et de l'action d'étranglement du réducteur de pression ;
- détermine une absorption de volume d'un réservoir intermédiaire à l'aide du débit volumique estimé ;
- estime une pression de freinage actuelle à l'aide d'un déplacement de volume d'un maître-cylindre de frein vers un frein de roue correspondant à une course d'actionnement de la pédale de frein et à l'aide de l'absorption de volume calculée du réservoir intermédiaire ; et
- provoque une ouverture du réducteur en fonction de la pression de freinage nécessaire déterminée et de la pression de freinage actuelle.

11. Support de données lisible par ordinateur, sur lequel est enregistré un produit programme informatique qui, lorsqu'il est exécuté par une unité de commande d'un système de freinage, met en oeuvre le procédé défini dans les revendications précédentes.
